# EUROPEAN PATENT SPECIFICATION

(11) **EP 4 517 388 B1**
(45) Date of publication and mention of the grant of the patent: **22.07.2026**
(21) Application number: 23382880.5
(22) Date of filing: 29.08.2023
(51) Int. Cl.: G01T 1/169, G01T 7/00

(54) **UNMANNED AERIAL VEHICLE WITH SPECTROMETRIC DETECTION MODULE FOR CHARACTERIZATION OF WALLS**
UNBEMANNTES LUFTFAHRZEUG MIT SPEKTROMETRISCHEM DETEKTIONSMODUL ZUR CHARAKTERISIERUNG VON WÄNDEN
VÉHICULE AÉRIEN SANS PILOTE AVEC MODULE DE DÉTECTION SPECTROMÉTRIQUE POUR LA CARACTÉRISATION DE PAROIS

(43) Date of publication of application: 05.03.2025
(73) Proprietor: Enusa Industrias Avanzadas S.A. S.M.E., 28040 Madrid (ES); UAV AUTOSYSTEMS HOVERING SOLUTIONS ESPAÑA, S.L., 28050 Madrid, Madrid (ES)
(72) Inventor: LLORET LLORCA, Miriam, 28040 MADRID (ES); SORIA VELASCO, Alejandro, 28040 MADRID (ES); ESPADA MORENO, Francisco José, 28050 MADRID (ES); REDONDO PLAZA, Carlos, 28050 MADRID (ES); GRANDE MORÓN, José Luis, 28050 MADRID (ES)
(74) Representative: Isern Patentes y Marcas S.L.

(56) References cited:
- KR-B1- 102 019 891
- LAZNA TOMAS ET AL: "Unmanned Aircraft System-Based Radiological Mapping of Buildings", 2022 IEEE/RSJ INTERNATIONAL CONFERENCE ON INTELLIGENT ROBOTS AND SYSTEMS (IROS), IEEE, 23 October 2022 (2022-10-23), pages 1794 - 1801, XP034258321, [retrieved on 20221226], DOI: 10.1109/IROS47612.2022.9981415

## Description

### TECHNICAL SECTOR

The invention belongs to the nuclear facilities sector. In particular, it refers to an autonomous unmanned aerial vehicle with spectrometric detection module for campaigns for radiological characterization and declassification of interior walls of any nuclear facility, especially in its decommissioning phase.

### BACKGROUND OF THE INVENTION

Throughout the decommissioning phase of a nuclear facility, a large part of the efforts is focused on the preliminary radiological characterization of buildings, zone classification and decommissioning planning, as well as final characterizations to declassify materials. To carry out these characterizations, a high number of measurements is required that cover the entire wall, which must be carried out on different occasions: an initial characterization, to know the state of the wall, intermediate characterizations, each time contaminated areas are eliminated, and the final characterization, in order to demonstrate that the wall complies with the declassification levels indicated in the regulations.

At present the characterization and / or declassification of walls are carried out by hand contamination meters, handled by an operator. The works are carried out completely manually and involve the continuous assembly and disassembly of scaffolding. On the other hand, it is necessary that the measurements are carried out almost in contact with the surface and the result may not be reliable, since it does not separate natural and artificial isotopes. From the dose rate data reported by the contamination meter, and knowing the isotopic value of the location, it is determined what activity of each radioisotope is present in the wall. It is worth highlighting the importance of the human factor in taking measurements (for example, the uncertainty associated with the measurement time); the recording of the data, which is done manually, and the analysis thereof.

The high uncertainty, together with the low reliability indicated above, can lead to the non-declassification of declassifiable material, with the consequent increase in waste to be stored, managed, and controlled for hundreds of years.

There are commercial systems composed of detectors in drone designed to carry out characterization tasks in environments with high radiation fields, associated, for example, with accidents such as the one at the Fukushima nuclear power plant. However, there is no system designed for declassification tasks. Documents KR 102 019 891 B1 (SUNKWANG ATOMIC ENERGY SAFETY) and XP034258321 [DOI: 10.1109/IROS47612.2022.9981415, "Unmanned aircraft system-Based Radiological Mapping of Buildings", 2022 IEEE/RSJ INTERNATIONAL CONFERENCE ON INTELLIGENT ROBOTS AND SYSTEMS (IROS), IEEE, 23 October 2022, pages 1794-1801, by Tomás LAZNA *et al*.], disclose unmanned aerial vehicles with spectrometric detection module for characterization of walls, according to the preamble of appended independent claim 1.

It is therefore desirable to have an automatic system to carry out the measurements and allow a declassification of the walls.

### SUMMARY OF THE INVENTION

The object of the present invention is to provide an unmanned aerial vehicle according to claim 1, that allows radiological characterization automatically by gamma spectrometry of walls and interior surfaces of nuclear or radioactive facilities with very low pollution levels, the final objective being the declassification of these walls. Therefore, the invention proposes an unmanned aerial vehicle equipped with an indoor positioning system where there is no GNSS signal based, among other systems, on laser LIDAR. The vehicle is also provided with a front stabilization bar where a detection module and distance sensors to the wall are located independent of the positioning system. The detection module is provided with a scintillator detector and a multichannel analyzer. It should be noted that all electronics intended for position estimation are in the vehicle, i.e., no external positioning devices are required. The sensing module comprises a 2 x 2" Nal or 1.5 x 1.5" CeBr₃ interchangeable scintillator, combining lightness, sensitivity and easy integration of its electronics into the vehicle. Thanks to the combination of the detector, the laser positioning system and the distance sensors to the wall, not provided for in state-of-the-art drones, it is possible to carry out a final declassification of the walls, which until now was not possible with existing drones. The use of the invention also involves both the reduction of radiological risks and the risks associated with other aspects of conventional safety.

Thanks to the vehicle of the invention, the human factor is avoided both in taking measures and in its traceability, since the proposed system allows the orderly and real-time recording of radiological information.

The invention also provides a declassification system comprising the autonomous vehicle and a field computer that communicates with the on-board computer located in the chassis. The on-board computer in the chassis and the field computer communicate with each other via a radio antenna.

The vehicle is designed to maintain the detector during the entire inspection time at a detector-surface distance to be measured from 3 to 20 cm, while the vehicle moves at speeds of the order of 2 to 15 cm/s. The distance to the wall is calculated and preserved exclusively by means of the stabilization of the vehicle in flight, there being no mechanical means to maintain said distance from the wall.

Monte Carlo simulations and experimental tests have been carried out to ensure that, with these inspection parameters, the selected detectors are able to reach the detection limits required by the regulations for the declassification of walls.

The result is a file that correlates the position in the wall with the gamma spectrum, which is then analyzed to transform the point cloud into a radiation map, allowing locating hot spots and compare the results with the allowable limits in the regulations.

### BRIEF DESCRIPTION OF THE FIGURES

In order to help a better understanding of the features of the invention following figures are accompanied as an integral part thereof, whose character is illustrative and not limiting:
Figure 1 shows the essential elements of the invention.
Figure 2 is a lower view of the vehicle of invention.
Figure 3 is a detail of the front stabilization bar.
Figure 4 shows the sensors on both sides of the stabilization bar.

### DETAILED DESCRIPTION

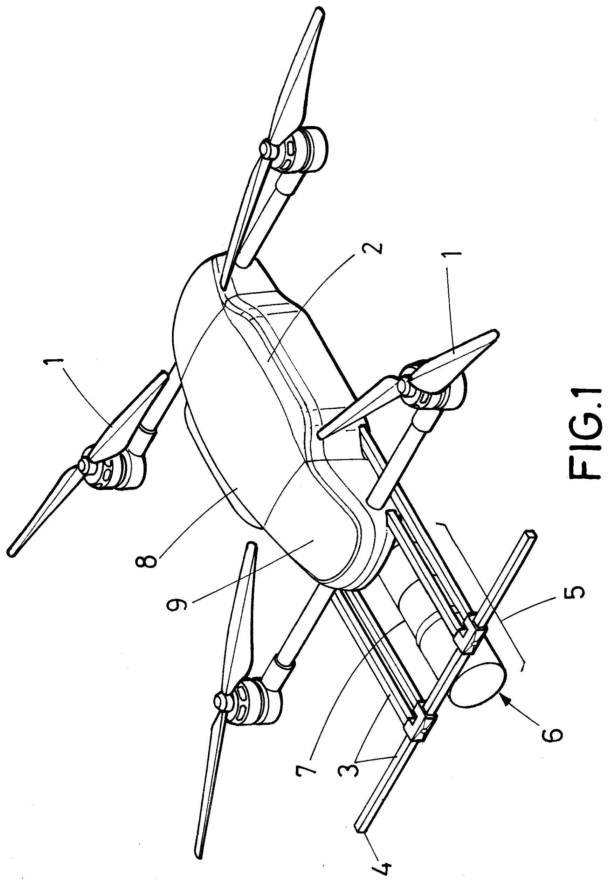

Referring to figure 1 the proposed vehicle 1 aims to characterize and declassify walls using a radiation detection module housed in a front stabilization bar 3, a vehicle positioning system 9 and distance sensors 4 in the bar 3, in order to automatically perform data collection, measurement recording and analysis of results.

A detection module 5 comprising a scintillation detector 6 has been selected, due to the high efficiency of this type of detectors for gamma emissions, since the objective is to characterize areas with a low or very low level of contamination. The module also includes a multichannel analyzer (MCA) 7 where the electronics responsible for analyzing the impulses registered in the scintillation crystal of the detector are located. The selected detectors are scintillators with crystals with dimensions from 1.5 x 1.5" to 3 x 3". In particular, the 2 x 2" Nal and 1.5 x 1.5" CeBr₃ scintillators combine lightness, sensitivity, and easy integration of their electronics into the vehicle.

Despite the small size of the crystal, the selected detectors can detect at least 50% of the declassification level indicated in Table 1. It is obtained that with inspection speeds of the order of cm/s and a distance to the wall of 3 to 20 cm, the detection capacity meets the regulations. The inspection parameters (inspection speed, distance to the wall, measurement time) must be defined in each campaign since they depend on the existing background in the area. In any case, the inspection shall be carried out at speeds of 2 to 15 cm/s and at distances to the surface between 3 and 20 cm. Since the system records its position at (X, Y, Z) at all times, the recorded activity results are analyzed taking into account the detector-wall distance.

The following table shows the levels of declassification for demolition and reuse of buildings according to Instruction IS-13 dated March 21, 2007, of the Nuclear Safety Council, on radiological criteria for the release of nuclear facility sites.

| Radioisotope | Activity per unit of surface for demolition (Bq/cm2) | Activity per unit of surface for reuse (Bq/cm2) |
|---|---|---|
| Co-60 | 1 | 1 |
| Cs-137 | 10 | 1 |

It is concluded from the previous criterion that it is imperative that the vehicle can carry out inspections at a distance equal to or less than 20 cm from the wall and at inspection speeds of the order of cm/s carrying the weight associated with the detection module (approximately 1.5 kg), ensuring uninterrupted operation and high reliability from the point of view of safety. In addition, the system must be able to carry out inspections of walls up to 20 meters high from the ground.

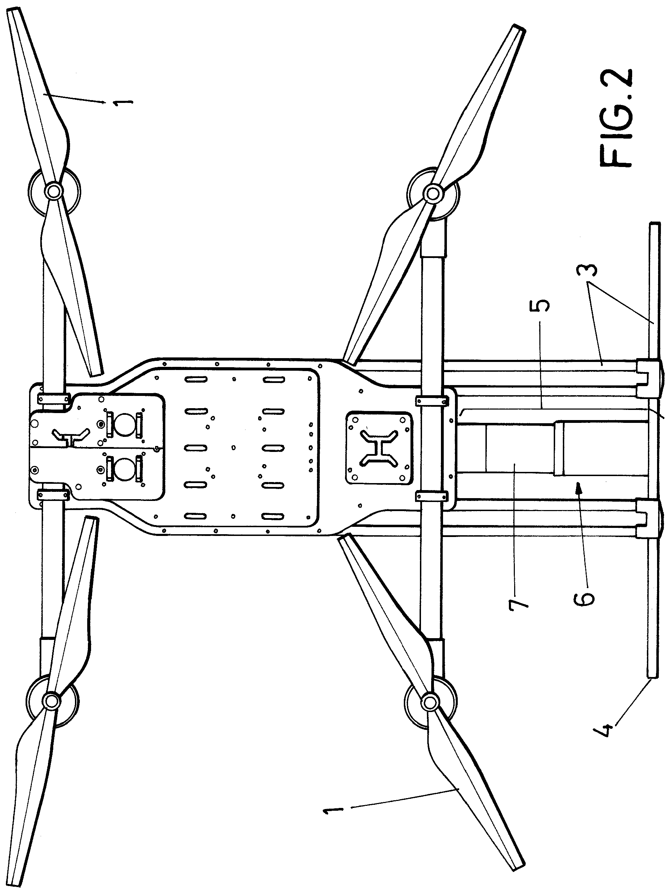

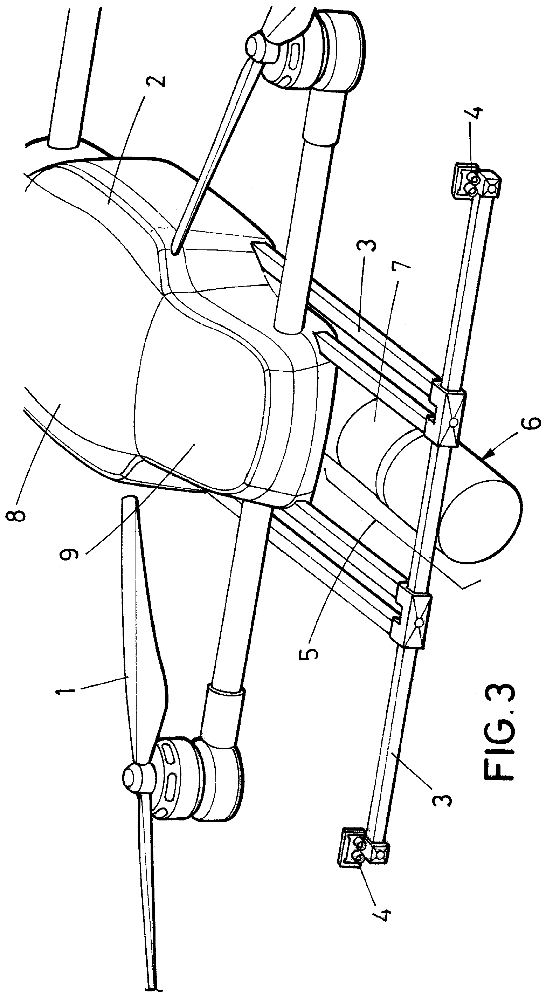

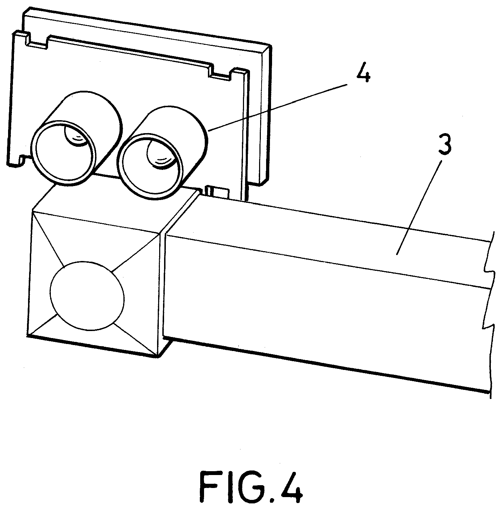

The invention has a main chassis 2 where the propellers, engines (preferably four to six) and the on-board computer 8 (Figs. 1 and 2) are located, plus a vehicle positioning system 9. On a front stabilization bar 3 (Figs. 3 and 4) the detection module 5 comprising a Nal or CeBr₃ 6 detector and a multichannel analyzer 7 are located. The Nal detector is used for inspections in dynamic mode for its high efficiency, and the CeBr₃ for inspections in static mode due to its high resolution. Both detectors are interchangeable. The distance sensors 4 with respect to the wall are located on each side of the bar and are independent of the positioning system 9 of the vehicle.

During the flight, for its positioning in height, the vehicle is provided with the laser positioning system 9 for a 3D scan of the ground. To avoid possible obstacles on the wall and keep the distance from it within the desired range, the system has distance sensors 4 for scanning the wall, in such a way that it can detect a protrusion during the flight and move far enough away to avoid it and then return to the established distance once the obstacle has been circumvented.

Chassis 2 is made from carbon fiber material and laser cut for precision. For the construction of the chassis, for the most part, braided carbon fiber, impact resistant and low in weight, has been used, resulting in the ideal material for the construction of the aircraft chassis and other parts subject to significant stress. It consists of a plate from 2 to 4 mm thick, with an "H" shape whose dimensions are between 100 x 300 mm and 300 x 700 mm and two round carbon fiber tubes between 300 and 900 mm in length, 25 mm outer diameter and 1-2 mm thickness that house the four motors at their ends (for example, brushless motors between 100 and 500 kv). This plate is reinforced with square carbon fiber tubes on the back (depending on the direction of flight), with dimensions 10 x 10 mm and a thickness of 1-3 mm. The diagonal dimension (without propellers) is between 400 and 1100 mm. Selected folding propellers are between 375 and 700 mm. The main power is supplied by a battery or cable. If wired, performance increases since the vehicle can be taking measurements for a longer time without requiring grounding connection for battery change. Since the length of the power cord can be considerable (estimated at about 30 meters), a conductor with the following characteristics has been identified:
□ Multi-conductor core in order to provide greater flexibility to the cable.
□ 4 independent conductors, for redundancy in case of breakage (a significant level of fatigue is expected).
□ Section 1 mm (American "AWG" gauge between 12 and 20).
□ Silicone case or similar in order to increase flexibility.
□ Safety connectors both in the vehicle and in the connection with the power supply.

As for the power supply, a redundant power supply is used, in order to avoid a loss of vehicle lift in the event of a power system failure. The power supply will provide a voltage between 54 V DC and 60 V DC to the vehicle. Cutting mechanisms are established in the event of overcurrent in order to avoid further damage in the event of an anomaly in the operation of the robot. Optionally, the vehicle is equipped with a 10000-20000 mAh battery which will provide autonomy of approximately 30 minutes (depending on the final weight of the detection module, which is between 1 kg and 5 kg without counting the battery or the detection module).

The communication between the on-board computer 8 and external processing means (not shown in the figure) is carried out at radio frequencies within the ISM bands with a radio range between 433 MHz and 5.8 GHZ, which allows the equipment to be operated and the maneuver to be monitored even in large installations.

The frontal stabilization bar 3 (Fig.3), in addition to housing the detection module 5, protects the propellers against possible collisions with the surface under characterization. The front stabilization bar 3 has the unique distance sensors 4 (Fig. 4), independent of the ones used for the navigation of the vehicle, which keep the vehicle at a distance as fixed as possible from the surface to be scanned. These distance sensors 4 can be time-of-flight optical range detectors, and provide distance measurements at a rate much higher than that provided by the rest of the vehicle's sensors, improving the stability of the vehicle in positioning along the axis normal to the scanned surface. It should be noted that the distance between the surface to be measured and the vehicle is maintained without the use of mechanical means, that is, it is carried out exclusively by controlling the stability of the vehicle in flight, which provides an extra degree of versatility to the system, since it has less dependence on irregularities in the surfaces that are the object of measurement that are common in work environments. The control of the distance without mechanical elements ("stop" type) is achieved thanks to a parameterization of the specific control loops depending on: i) the weight of the detector, and ii) existence or not of battery. The specific control loop that regulates the distance between detector and surface takes as an estimate the information taken by laser sweeps (LiDAR), as well as distance sensors (ToF) installed in the front stabilization bar. While the LiDAR information feeds the control loop at a frequency between 5 Hz and 20 Hz, the distance sensors installed on the front bar do so at a frequency between 150 Hz and 300 Hz, providing extra distance information between LiDAR sweeps. Vehicle control is performed by an Extended Kalman Filter (EKF) dedicated to inclination control (attitude), which is fed by one or more thermally calibrated inertial units. This filter works with a data input frequency between 1000 Hz and 2000 Hz from the inertial unit(s). As a reference to the control system, inclination instructions calculated based on the error of distance to the surface object of measurement are provided, which is derived from speed, which in turn is derived from acceleration, this being the determinant of the reference inclination provided to the control system.

As for the detection module 5 consisting of a scintillation detector 6 and a multichannel analyzer 7, it is located in the front stabilization bar 3 at the front of the vehicle. Using a mechanical adjustment mechanism (when the vehicle is stationary), the relative distance between the sensor and the crossbar is adjusted between an approximate range of 0 to 10 cm, in order to optimize the location of the detector in terms of distance to the target surface.

The vehicle optionally has a side protection system comprising two parts made by 3D printing with reinforced material, mainly Kevlar and carbon fiber, each located on one side of the main chassis.

The electronic core of the vehicle is based on a PCB (Printed Circuit Board). This design has capability to power up to six propulsion engines, image capture sensors, high-power lighting systems, on-board computer, as well as other peripherals. It features over-current protections, battery input voltage measurement circuits, global consumption control, communication port distribution and auxiliary connections for the integration of optional elements, such as gas sensors or thermal imaging. The indoor positioning system uses sensors based on ToF (time of flight) to estimate the distance to the limits of the environment (walls, ceiling and floor, as well as intermediate elements such as columns).

The position estimation system uses two different bases in order to estimate its position and prevent possible slippage or loss of reference significantly afecting the behavior of the vehicle. Whereas the global coordinate computation is performed by means of a laser scan comparison system with cell occupancy based on ICP, the relative distance between detector and the wall uses an independent base since while the ICP works with cells of occupation between 5 and 20 cm, the distance between detector and the wall has to be calculated in the range of millimeters. The absolute positioning system also uses the data of the inertial unit(s) to filter its position, since the use of 20 cm occupancy cells is unfeasible to obtain reliable position data. On the other hand, the forward speed of the vehicle is calculated by differential comparison of laser scans (ICP) and it does not depend, in any case, on the calculation of global position by cell occupation. Position estimation allows to program autonomous navigation patterns. During the sweep, the vehicle records its position at any time, as well as the distance between the detection module, located on the front stabilization bar and the surface of the wall being measured.

The system can inspect areas of walls with heights of up to 20 meters. The invention has for this purpose two operation modes:
- Dynamic mode: By performing scans, sweeping in the form of an "S" the entire wall to be inspected.
- Static mode: By performing static measurements, positioning precisely at previously selected points.
It is essential to have these two modes of operation, since it is what the regulations require to be able to declassify the surfaces and walls present in nuclear facilities.

The system acquires data, performs calculations, presents the results in graphs or maps, has decision-making criteria and produces reports with which walls can be characterized / declassified. During the inspection, the pilot does not interact with the vehicle. The points to be inspected and the route to be carried out are entered into the computer, and the system performs the inspection automatically. Data transmission between field computer and on-board computer is done in real time via radio as described above. The on-board computer controls the data acquisition by means of the detection module through different algorithms to start and stop the detection, differentiating between dynamic measurements and static measurements. A software integrated into the vehicle's on-board computer has been developed to collect the control functions of the sensing module and the configuration of the inspection parameters. This development allows running different codes, developed in Python from the functions available in the SDK (Software Development Kit) of the Multi Channel Analyzer (MCA), responsible for applying the appropriate voltage and gain to each detector, starting/ending acquisitions in both modes of operation and recording data taken during inspections. In addition, this development has a configuration window where the user is allowed to select the type of detector to be used in each mission, select the mode of operation (dynamic or static), configure the measurement times, distance from the detector to the wall, the passage of the scan and lateral boundaries of the wall. If a dynamic sweep is carried out, after entering into the field computer the limits of the area to be inspected and the intrinsic parameters of the flight (sweep speed, vertical passage and distance to the wall), the vehicle will travel through the inspection area in an S-shape recording a spectrum every second. At the end of the inspection the complete file with all the spectra will be sent to the field computer and the analysis of these spectra will be carried out in order to provide the coordinates of the center of those grids (1 × 1 m) that are considered hot spots. This analysis can be performed by means of a Python script developed for this purpose or using the GENIE 2000 software. When a static measurement is made, the vehicle will be steered sequentially to each of the selected points and will take the measurements for a pre-selected time, recording one spectrum per second. As in dynamic scanning, the analysis of spectra and the determination of activity can be done using a Python script developed for that purpose.

The data processing is carried out on the field computer automatically, generating a customized report where the information of the results appears in the chosen format: Color map, graphs, reports, etc.

The designed system can be used in radiological characterization campaigns of two natures:
- Preliminary characterization of interior walls, in order to serve as a first x-ray of the wall, as well as input data for the classification of release units, for their subsequent declassification
- Characterization for the declassification of the wall, in order to ensure with sufficient confidence that the wall has radiation levels below the declassification limits and that it can be demolished as conventional material.

## Claims

1. Unmanned aerial vehicle (1) with spectrometric detection module (5) for characterization of walls comprising:
- a chassis (2) fitted with propellers, engines, and a positioning system (9) of the vehicle, as well as an on-board computer (8);
- a detection module (5) comprising a Nal or CeBr₃ scintillation detector (6) for spectrometric detection of radioisotopes and a multichannel analyzer (7) to analyze and send the data obtained by the detector to the on-board computer (8), and
- distance sensors (4) for measuring distance to the wall;
the vehicle (1) being **characterized by** further comprising a front stabilization bar (3) in which the detection module (5) and the distance sensors (4) are housed, for keeping the vehicle at a horizontal distance in a line perpendicular to the wall of between 3 and 20 cm.

2. Unmanned aerial vehicle according to claim 1 wherein the distance sensors (4) are optical time-of-flight sensors.

3. Spectrometric system for declassification of walls comprising an unmanned vehicle (1) according to any of the preceding claims provided with a radio antenna and a field computer that communicates with the on-board computer through said antenna.

## Patentansprüche

1. Unbemanntes Luftfahrzeug (1) mit einem spektrometrischen Detektionsmodul (5) zur Charakterisierung von Wänden, umfassend:
- ein Fahrgestell (2), das mit Propellern, Triebwerken und einem Positionierungssystem (9) des Fahrzeugs sowie einem Bordcomputer (8) ausgestattet ist;
- ein Detektionsmodul (5), umfassend einen Nal- oder CeBr₃-Szintillationsdetektor (6) zur spektrometrischen Detektion von Radioisotopen und einen Mehrkanalanalysator (7) zur Analyse und Übertragung der vom Detektor erlangten Daten an den Bordcomputer (8), und
- Abstandssensoren (4) zur Messung des Abstands zur Wand;
wobei das Fahrzeug (1) **dadurch gekennzeichnet ist, dass** es ferner eine vordere Stabilisierungsstange (3) umfasst, in der das Detektionsmodul (5) und die Abstandssensoren (4) aufgenommen sind, um das Fahrzeug in einem horizontalen Abstand von zwischen 3 und 20 cm in einer zur Wand senkrechten Linie zu halten.

2. Unbemanntes Luftfahrzeug nach Anspruch 1, wobei die Abstandssensoren (4) optische Sensoren zur Messung der Flugzeit sind.

3. Spektrometrisches System zur Deklassifizierung von Wänden, umfassend ein unbemanntes Fahrzeug (1) nach einem der vorhergehenden Ansprüche, das mit einer Funkantenne und einem Feldcomputer bereitgestellt wird, der über die Antenne mit dem Bordcomputer kommuniziert.

## Revendications

1. Véhicule aérien sans pilote (1) avec module de détection spectrométrique (5) pour la caractérisation de parois comprenant :
- un châssis (2) équipé d'hélices, de moteurs et d'un système de positionnement (9) du véhicule, ainsi que d'un ordinateur embarqué (8) ;
- un module de détection (5) comprenant un détecteur à scintillation Nal ou CeBr₃ (6) pour la détection spectrométrique de radioisotopes et un analyseur multicanal (7) pour analyser et transmettre les données obtenues par le détecteur à l'ordinateur embarqué (8), et
- des capteurs de distance (4) pour mesurer la distance à la paroi ;
le véhicule (1) étant **caractérisé en ce qu'**il comprend en outre une barre de stabilisation avant (3) dans laquelle sont logés le module de détection (5) et les capteurs de distance (4), pour maintenir le véhicule à une distance horizontale, dans une ligne perpendiculaire à la paroi, comprise entre 3 et 20 cm.

2. Véhicule aérien sans pilote selon la revendication 1, dans lequel les capteurs de distance (4) sont des capteurs optiques à temps de vol.

3. Système spectrométrique pour la déclassification de parois comprenant un véhicule sans pilote (1) selon l'une quelconque des revendications précédentes, muni d'une antenne radio et d'un ordinateur de terrain qui communique avec l'ordinateur embarqué par l'intermédiaire de ladite antenne.
